Europäisches Patentamt

European Patent Office

Office européen des brevets

(11) Veröffentlichungsnummer: **0 290 913 B1**

(12) **EUROPÄISCHE PATENTSCHRIFT**

(45) Veröffentlichungstag der Patentschrift: **15.04.92**

(51) Int. Cl.⁵: **B01D 53/14**, C10K 1/16

(21) Anmeldenummer: **88107027.0**

(22) Anmeldetag: **02.05.88**

54 **Verfahren und Vorrichtung zur Reinigung von Rohgasen unter gleichzeitiger Gewinnung von Synthese- und Brenngas.**

(30) Priorität: **14.05.87 DE 3716199**

(43) Veröffentlichungstag der Anmeldung:
**17.11.88 Patentblatt 88/46**

(45) Bekanntmachung des Hinweises auf die
Patenterteilung:
**15.04.92 Patentblatt 92/16**

(84) Benannte Vertragsstaaten:
**DE FR GB IT NL SE**

(56) Entgegenhaltungen:
**EP-A- 0 152 755**
**US-A- 4 052 176**
**US-A- 4 242 108**

(73) Patentinhaber: **Linde Aktiengesellschaft**
**Abraham-Lincoln-Strasse 21**
**W-6200 Wiesbaden(DE)**

(72) Erfinder: **Ranke, Gerhard, Dipl.-Ing.**
**Feichtetstrasse 6**
**W-8134 Pöcking(DE)**
Erfinder: **Weiss, Horst, Dipl.-Ing.**
**Neufriedenheimer Strasse 37a**
**W-8000 München 70(DE)**

(74) Vertreter: **Schaefer, Gerhard, Dr.**
**Linde Aktiengesellschaft Zentrale Patentab-**
**teilung**
**W-8023 Höllriegelskreuth(DE)**

## Beschreibung

Die Erfindung betrifft ein Verfahren sowie eine Vorrichtung zur Reinigung von Rohgasen aus der Kohlevergasung unter gleichzeitiger Gewinnung von Synthesegas, von CO2-reichem Brenngas für die Erzeugung elektrischer Energie mittels Gasturbine und H2S/COS-reichem Gas für die Schwefelgewinnung in einer Claus-Anlage, wobei das Rohgas konvertiert und nach Konvertierung abgekühlt wird und anschließend im unteren Säulenabschnitt einer Waschsäule H2S und COS mit mit CO2 vorbeladenen Waschmittel entfernt werden, während im oberen Abschnitt CO2 ausgewaschen wird und gereinigtes Synthesegas die Waschsäule verläßt.

Bei der Vergasung von kohlenstoffhaltigen Einsätzen (Kohle, Öl, Raffinerierückstände) entsteht ein Gasgemisch, das bevorzugt aus H2 and CO besteht, jedoch auch andere Komponenten wie CO2, H2S und Inertgase enthält.

Entsprechend der Weiterverwendung des Gases als Synthesegas (z.B. NH3 oder Methanolsynthese), als Ausgangsprodukt für die H2 oder CO-Gewinnung oder als Brenngas wird das heiße Rohgas bei bekannten Verfahren zunächst entsprechend den Randbedingungen des geforderten Synthesegases konvertiert, nach Konvertierung teilweise abgekühlt (entweder in einem Wasteheat-Boiler zur Dampferzeugung oder durch Wasserquench) und dann in einer zweistufigen Sauergaswäsche gereinigt, wobei im unteren Säuleabschnitt das H2S und COS entfernt wird, während im oberen Abschnitt CO2 auf die geforderte Reinheit ausgewaschen wird. Normalerweise werden für die Entfernung von CO2, H2S und COS physikalische Wäschen verwendet.

Ein bekanntes Verfahren für die gleichzeitige Gewinnung von Synthesegas und einem Brenngas für einen Einsatz zur Erzeugung elektrischer Energie mittels Gasturbinen ist in der DE-OS 34 27 633 beschrieben. Bei diesem Verfahren werden die Rohgasströme getrennt abgekühlt, wobei nur der Rohgasstrom zur Erzeugung von Synthesegas konvertiert wird (d.h. Umsetzung von CO mit Wasserdampf zu H2 und CO2), und in zwei parallelen Waschsäulen gewaschen. Dabei wird das Synthesegas zunächst selektiv entschwefelt und anschließend das CO2 ausgewaschen.

Bei dem bekannten Verfahren wird für die Entschwefelung des Brenngases das überschüssige, mit CO2 beladene Waschmittel der Synthesegaswäsche verwendet. Durch diese Kombination ist es möglich, einen Teil des CO2, welches in der Synthesegaswäsche ausgewaschen wurde, ohne zusätzlichen Energieaufwand mit dem Brenngas abzustrippen und damit Kompressionsenergie für die Luftzumischung zur Begrenzung der maximalen Verbrennungstemperatur zu sparen.

Das bekannte Verfahren hat neben dem Vorteil der CO2-Anreicherung im Brenngas jedoch mehrere wesentliche Nachteile.

In der H2S-Wäsche wird neben H2S und COS auch viel CO2 mit ausgewaschen (entsprechend CO2-Partialdruck und CO2-Löslichkeit). Bei den üblichen selektiven Sauergaswäschen wird das H2S und COS in einer nachgeschalteten Anreicherungssäule so weit konzentriert, daß die bei der Warmregenerierung anfallende H2S-Fraktion in einer Claus-Anlage zu elementarem Schwefel umgesetzt werden kann.

In dieser Anreicherungssäule wird jedoch zum Zurückhalten des H2S und COS ein kaltes, bereits mit CO2 beladenes Waschmittel benötigt, um das zusammen mit dem CO2 freigesetzte H2S zurückzuwaschen und damit ein schwefelfreies Restgas zu gewinnen. Für diese Rückwaschung wird normalerweise der Waschmittelüberschuß der CO2-Wäsche verwendet. Bei der in den bekannten Verfahren offenbarten Kombination fehlt jedoch das mit CO2 beladene Waschmittel. Somit ist keine Anreicherung des H2S und COS möglich. Dadurch sinkt der Schwefelgehalt der Schwefelfraktion so stark ab, daß keine Claus-Anlage verwendet werden kann. Zwar kann H2S aus solch einem Gasgemisch mit einer oxidativen Wäsche zu elementarem Schwefel umgesetzt werden, jedoch ist ein Nachteil dieser Wäschen, daß COS nicht reagiert und somit nicht ausgewaschen werden kann. Bei dem hohen COS-Gehalt von unkonvertiertem Rohgas (ca. 4 - 5% des Schwefels liegt als COS vor) treten dadurch beträchtliche Umweltprobleme auf.

Normalerweise wird die Stromerzeugung dem Bedarf angepaßt. Es treten somit tages- und jahreszeitliche Schwankungen auf. Deshalb muß die Gasmenge für die Erzeugung elektrischer Energie durch Kohlenverbrennung ebenfalls variabel sein. Um eine Lastschwankung der Vergasung und des Luftzerlegers zu vermeiden, wird normalerweise angestrebt, die Vergasung konstant zu fahren und die Mengenschwankung des Brenngases in der Synthese aufzufangen. Dies setzt voraus, daß Quench, Konvertierung und die beiden parallelen Wäschen mit schwankenden Randbedingungen fahren müssen, was einen hohen Regelaufwand beim Betrieb der Gesamtanlage voraussetzt.

Beide Stränge (Gasabkühlung, Konvertierung und beide Sauergaswäschen) müssen für die jeweils maximale Gasmenge ausgelegt werden. Daher sind beide Stränge überdimensioniert und arbeiten normalerweise nicht bei optimalen Betriebsbedingungen. Gleichzeitig bedingt eine Überdimensionierung höhere Investitionskosten.

Es ist daher die Aufgabe der Erfindung, ein Verfahren zur Reinigung von Rohgasen bei gleichzeitiger Gewinnung von Synthese- und Brenngas so auszugestalten, daß bei guter Flexibilität unter gleichzeitiger Erzeugung einer hochkonzentrierten H2S-Fraktion ein CO2-reiches Brenngas gewonnen wird.

Diese Aufgabe wird erfindungsgemäß dadurch gelöst, daß ein Teil des gewonnenen Synthesegases abgezweigt, zur Abstrippung von $CO_2$ unter Druck aus dem ausschließlich mit $CO_2$ beladenen Waschmittel aus dem oberen Säulenabschnitt verwendet und als mit $CO_2$ angereichertes Brenngas gewonnen wird, worauf das ausschließlich mit $CO_2$ beladene, teilweise gestrippte Waschmittel für die Konzentrierung von Schwefelverbindungen in einer $H_2$S-Anreicherungssäule verwendet wird, daß die Konzentrierung von Schwefelverbindungen in der $H_2$S-Anreicherungssäule durch Zurückwaschen des zusammen mit der Hauptmenge des $CO_2$ im Strippabschnitt der $H_2$S-Anreicherungssäule freigesetzten $H_2$S/COS mit dem kalten, mit $CO_2$ beladenen Waschmittel aus der $CO_2$-Abstrippsäule erfolgt und daß das mit $H_2$S beladene Waschmittel zur Gewinnung von einer $H_2$S/COS-reichen Gasfraktion und von regeneriertem Waschmittel für die Waschsäule einer Warmregenerierung unterzogen wird.

Als Waschmittel können dabei Methanol, Ethanol, Aceton N-Methylpyrrolidon, Dimethylformamid, Propylencarbonat oder Polyethylenglykoldialkylether eingesetzt werden.

Durch die erfindungsgemäße Verfahrensführung wird das Brenngas mit CO2 angereichert, und gleichzeitig steht das nur mit CO2 beladene Waschmittell für die H2S-Anreicherungssäule zur Verfügung, da das abgezweigte Synthesegas keine Schwefelverbindungen enthält und das abgestrippte CO2 die benötigte Lösungswärme dem Waschmittel entzieht, wodurch sich dieses abkühlt. Vom Kältehaushalt her ist das Abstrippen unter Druck gleichwertig mit einer Entspannung des beladenen Waschmittels und dabei teilweiser Verdampfung von CO2, welches in den bekannten Verfahren angewandt wird.

Ein zusätzlicher Vorteil besteht darin, daß die Gaserzeugung, Konvertierung und Sauergaswäsche bei konstanten Bedingungen durchgeführt werden können, während nur die Strippsäule mit der variablen Brenngasmenge beaufschlagt wird.

Erfindungsgemäß wird die Konvertierung, obwohl sie für die Gewinnung von Brenngas nicht erforderlich ist, doch zur Erzeugung von z.B. H2, Methanol- oder NH3-Synthesegas benötigt und somit vor der Abkühlung des Rohgases durchgeführt.

In weiterer Ausbildung des Erfindungsgedankens kann ein Teil des Rohgases vor der Konvertierung abgezweigt und unkonvertiert der Sauergaswäsche unterzogen werden. Dieses Verfahren wird man bevorzugt anwenden, wenn entweder für die Weiterverarbeitung zusätzlich zu dem Brenngas ein unkonvertiertes Gas benötigt wird, z.B. für die Gewinnung von reinem CO oder wenn keine großen Lastschwankungen des Brenngas erwartet werden, z.B., wenn die elektrische Energie, mittels Gasturbinen gewonnen, nur für die Synthesegaserzeugung und Weiterverarbeitung benötigt wird (autarke Anlage).

Normalerweise wird die CO2-Strippung bei dem Druck der Waschsäule durchgeführt. Eine weitere Ausführungsform des erfindungsgemäßen Verfahrens jedoch sieht vor, falls die Gaserzeugung wegen der nachfolgenden Synthese bei einem Druck durchgeführt wird, der höher liegt als der benötigte Druck für die Brennkammer, das abgezweigte Synthesegas vor der CO2-Strippsäule in einer Expansionsturbine energieleistend auf den Druck der Brennkammer zu entspannen und die CO2-Strippung erst bei reduziertem Druck zu unternehmen.

Nach einer besonderen Ausgestaltungsform des erfindungsgemäßen Verfahrens können auch andere Gase, die bestimmte Randbedingungen erfüllen, zusätzlich zu dem Brenngas bei der Abstrippung des CO2 unter Druck verwendet werden, z.B. Purgegase aus der Methanolsynthese, Restgase aus einer Stickstoffwäsche oder N2 aus einem Luftzerleger.

Erfindungsgemäß erfolgt die Konzentrierung von Schwefelverbindungen in der H2S-Anreicherungssäule durch Zurückwaschen des freigesetzten H2S/COS mit dem mit CO2 beladenen Waschmittel aus der CO2-Abstrippsäule, wodurch das H2S/COS im Sumpf der H2S-Anreicherungssäule angereichert wird und wobei N2 zur CO2-Abstrippung aus dem Waschmittel verwendet wird.

Mit besonderem Vorteil wird dabei das kalte Waschmittel seitlich der Anreicherungssäule entnommen und nach Anwärmung gegen regeneriertes Waschmittel der Säule in einem tieferen Abschnitt wieder zugeführt.

In weiterer Ausgestaltung des Erfindungsgedankens wird das in der Anreicherungssäule anfallende Restgas (bevorzugt CO2 und N2, jedoch H2S-frei) nach Anwärmung gegen ankommendes Rohgas zusammen mit der Verbrennungsluft verdichtet und dem Brenngas vor der Brennkammer zugemischt.

Von besonderem Vorteil ist dabei, daß, da CO2 eine höhere spezifische Wärme als Luft hat, zur Senkung der Verbrennungstemperatur in der Brennkammer weniger Gas verdichtet werden muß.

Ein weiterer Vorteil besteht darin, daß durch die Rückführung keine Waschmitteldampfemissionsprobleme auftreten, da das Restgas entsprechend Druck und Temperatur mit Waschmitteldampf gesättigt ist.

Normalerweise ist es wirtschaftlich sinnvoll und auch aufgrund örtlicher Umweltschutzbestimmungen

3

notwendig, das beladene Waschmittel auf einen Zwischendruck zu entspannen und die anfallenden Flashgase (bevorzugt H2 und CO) nach Kompression zum Rohgas zurückzuführen. Bei Zumischung des Restgases zum Brenngas, gemäß einer weiteren Ausgestaltung des Erfindungsgedankens, ist dabei von Vorteil, daß die Zwischenentspannungsbehälter und der Rückführverdichter entfallen, da die brennbaren Bestandteile mit verbrannt werden.

Die Erfindung betrifft überdies eine Vorrichtung zur Reinigung von konvertierten Gasen gemäß dem Verfahren mit einer Waschsäule, einer $CO_2$-Abstrippsäule und einer $H_2S$-Anreicherungssäule, wobei von einer Leitung, die Synthesegas von der Waschsäule ableitet, eine zweite Leitung abzweigt, die in den unteren Abschnitt der $CO_2$-Abstrippsäule führt, die Waschsäule mit der $CO_2$-Abstrippsäule so verbunden ist, daß eine Leitung für mit $CO_2$ beladenem Waschmittel von dem oberen Teil der Waschsäule zu der Abstrippsäule führt, die über eine Leitung wiederum mit der $H_2S$-Anreicherungssäule verbunden ist, wobei eine Leitung für $H_2S$/COS-reiches Waschmittel von dem unteren Abschnitt der Waschsäule zu der Anreicherungssäule führt, wobei Leitungen von der Unterseite der Anreicherungssäule über einen Warmregenerierer, der mit einer Claus-Anlage verbunden ist, zu dem oberen Abschnitt der Waschsäule führen und wobei aus dem oberen Teil der $CO_2$-Abstrippsäule über eine Leitung $CO_2$-angereichertes Brenngas abgezogen wird. Weiterhin führen die Leitungen vom Warmregenerierer zu dem oberen Abschnitt der Waschsäule über einen Wärmetauscher, wobei der Wärmetauscher mit einer seitlich von der Anreicherungssäule herführenden Leitung verbunden ist.

Im folgenden sei die Erfindung anhand eines schematisch dargestellten Ausführungsbeispiels näher erläutert.

Ein konvertiertes Rohgas, welches H2 und CO, jedoch auch CO2, H2S, COS und Inertgase enthält, wird nach Zugabe einer kleinen Menge Methanol in einem Wärmetauscher 1 abgekühlt und über einen Methanol/H2O-Abscheider 2 in den unteren Abschnitt einer Waschsäule 3 geführt, in der das Gas von CO2 und H2S/COS befreit wird, indem es mit durch Leitung 19 herangeführtem Methanol berieselt wird, das die Verunreinigungen aufnimmt. Das dadurch gewonnene Synthesegas zieht über eine Leitung 4 aus der Waschsäule ab. Ein Teil wird abgezweigt und über eine Leitung 5 in den unteren Abschnitt einer CO2-Abstrippsäule 6 geführt. CO2-beladenes Methanol wird seitlich der Waschsäule entnommen und über eine Leitung 7 in den oberen Abschnitt der CO2-Abstrippsäule 6 geführt, wo das abgezweigte Synthesegas benützt wird, um CO2 abzustrippen und als CO2-angereichertes Brenngas über eine Leitung 8 in eine Brennkammer geleitet zu werden. Das kalte, teilweise abgestrippte, mit CO2-beladene Methanol verläßt die Abstrippsäule über eine Leitung 9. In einer H2S-Anreicherungssäule 10 dient dieses Waschmittel dazu, das in dieser Säule aus dem über Leitung 11 von der Waschsäule hereingeführten, mit H2S/COS beladenen Waschmittel freigesetzte H2S/COS zurückzuwaschen, wodurch das H2S/COS im Sumpf der H2S/Anreicherungssäule 10 angereichert wird. Seitlich der Anreicherungssäule wird das kalte Methanol über eine Leitung 12 einem Wärmetauscher 13 zugeführt, wo es in Wärmeaustausch mit regeneriertem Methanol erwärmt wird. Danach wird es der Anreicherungssäule im unteren Abschnitt wieder zugeführt. Über eine Leitung 14 wird dem unteren Abschnitt der Anreicherungssäule N2 zugeführt, wo es CO2 aus dem außerdem mit H2S/COS beladenen Methanol abstrippt, welches über Leitung 15 in einen Warmregenerierer 16 geführt wird. In dem Warmregenerierer 16 wird außerdem über Leitung 21 das Methanol/H2O-Kondensat aus dem Abscheider 2 eingespeist. Vom Warmregenerierer 16 führt eine Leitung 17 das H2S/COS-reiche Gas in eine Claus-Anlage 18 und eine Leitung 19 regeneriertes Methanol zurück in die Waschsäule 3. CO2 und N2 enthaltendes Restgas wird über Leitung 20 aus der Anreicherungssäule 10 abgeführt.

Die bei einem beispielhaften Verfahren umgesetzten Stoffmengen und -zusammensetzungen sowie einige Drücke und Temperaturen sind in der Stoffbilanz der Tabelle zusammengefaßt.

4

T a b e l l e
<u>Stoffbilanz</u>

| Bezugszeichen Stoffart | 1 Rohgas (konvertiert) | 4 Synthese-gas | 7 CH₃OH | 8 Brenn-gas | 14 Stripp-gas | 17 Sauer-gas | 19 CH₃OH | 20 Restgas | 11 CH₃OH |
|---|---|---|---|---|---|---|---|---|---|
| Komponenten Vol% | | | | | | | | | |
| H₂ | 56,6 | 96,9 | | 82,0 | | | | 0,2 | |
| N₂ + CO + CH₄ | 1,9 | 3,1 | | 2,6 | | 2,0 | | 10,1 | |
| CO₂ | 40,8 | 10 ppm | | 15,4 | 100,0 | 64,3 | | 89,7 | |
| H₂S/COS | 0,7 | 0,1 ppm | | 1 ppm | | 33,7 | | 10 ppm | |
| Menge Nm³/h | 100.000 | 24.620 | 62t/h zuzügl. gelöste Kompon. | 39.860 | 3.750 | 2.180 | 125 t/h zuzügl. gelöste Kompon. | 37.090 | 63 t/h zuzügl. gelöste Kompon. |
| Druck bar | 58 | 56 | | 55 | 4 | 2 | | 1,1 | |
| Temperatur °C | 35 | 25 | | 25 | 20 | 30 | | 25 | |

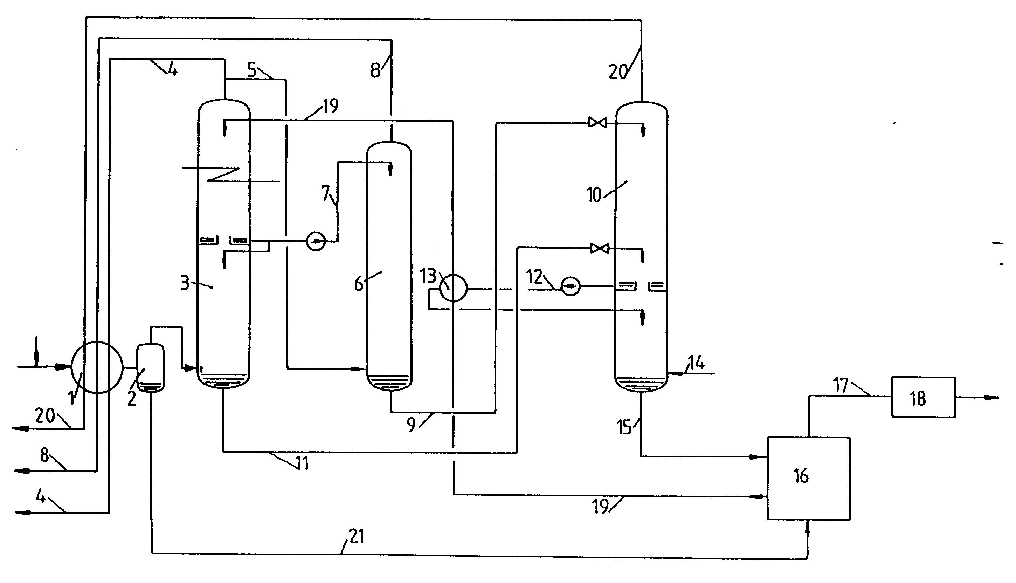

**Patentansprüche**

1. Verfahren zur Reinigung von Rohgasen aus der Kohlevergasung unter gleichzeitiger Gewinnung von Synthesegas, von $CO_2$-reichem Brenngas für die Erzeugung elektrischer Energie mittels Gasturbine

5

und von $H_2S$/COS-reichem Gas für die Schwefelgewinnung in einer Claus-Anlage, wobei das Rohgas konvertiert und nach Konvertierung abgekühlt wird und anschließend im unteren Säulenabschnitt einer Waschsäule $H_2S$ und COS mit $CO_2$ vorbeladenem Waschmittel entfernt werden, während im oberen Abschnitt $CO_2$ ausgewaschen wird und gereinigtes Synthesegas die Waschsäule verläßt, **dadurch gekennzeichnet,** daß ein Teil des gewonnenen Synthesegases abgezweigt, zur Abstrippung von $CO_2$ unter Druck aus dem ausschließlich mit $CO_2$ beladenen Waschmittel aus dem oberen Säulenabschnitt verwendet und als mit $CO_2$ angereichertes Brenngas gewonnen wird, worauf das ausschließlich mit $CO_2$ beladene, teilweise gestrippte Waschmittel für die Konzentrierung von Schwefelverbindungen in einer $H_2S$-Anreicherungssäule verwendet wird, daß die Konzentrierung von Schwefelverbindungen in der $H_2S$-Anreicherungssäule durch Zurückwaschen des zusammen mit der Hauptmenge des $CO_2$ im Strippabschnitt der $H_2S$-Anreicherungssäule freigesetzten $H_2S$/COS mit dem kalten, mit $CO_2$ beladenen Waschmittel aus der $CO_2$-Abstrippsäule erfolgt und daß das mit $H_2S$ beladene Waschmittel zur Gewinnung von einer $H_2S$/COS-reichen Gasfraktion und von regeneriertem Waschmittel für die Waschsäule einer Warmregenerierung unterzogen wird.

2. Verfahren nach Anspruch 1, dadurch gekennzeichnet, daß ein Teil des Rohgases vor der Konvertierung abgezweigt und unkonvertiert in einer weiteren Waschsäule entschwefelt wird und das entschwefelte unkonvertierte Gas zur $CO_2$-Abstrippung verwendet wird.

3. Verfahren nach einem der Ansprüche 1 und 2, dadurch gekennzeichnet, daß als Waschmittel Methanol, Ethanol, Aceton, N-Methylpyrrolidon, Dimethylformamid, Propylencarbonat oder Polyethlyenglykoldialkylether verwendet werden.

4. Verfahren nach einem der Ansprüche 1 bis 3, dadurch gekennzeichnet, daß das Waschmittel im oberen Abschnitt der Sauergaswaschsäule gekühlt wird.

5. Verfahren nach einem der Ansprüche 1 bis 4, dadurch gekennzeichnet, daß das abgezweigte Synthesegas vor der $CO_2$-Strippsäule in eine Expansionsturbine energieleistend auf den Druck der Brennkammer entspannt wird.

6. Verfahren nach einem der Ansprüche 1 bis 5, dadurch gekennzeichnet, daß bei der Abstrippung von $CO_2$ unter Druck dem Brenngas Gase zugemischt werden, wobei diese Gase vorzugsweise Purgegase aus einer Methanolsynthese, Restgase aus einer Stickstoffwäsche oder $N_2$ aus einem Luftzerleger sind.

7. Verfahren nach einem der Ansprüche 1 bis 6, dadurch gekennzeichnet, daß das kalte Waschmittel der $H_2S$-Anreicherungssäule seitlich entnommen und nach Anwärmung gegen regeneriertes Waschmittel der Säule in einem tieferen Abschnitt wieder zugeführt wird.

8. Verfahren nach einem der Ansprüche 1 bis 7, dadurch gekennzeichnet, daß in der $H_2S$-Anreicherungssäule $N_2$ zur $CO_2$-Abstrippung verwendet wird.

9. Verfahren nach einem der Ansprüche 1 bis 8, dadurch gekennzeichnet, daß das in der $H_2S$-Anreicherungssäule anfallende Restgas nach Anwärmung gegen ankommendes Rohgas zusammen mit der Verbrennungsluft verdichtet und dem Brenngas vor der Brennkammer zugemischt wird.

10. Vorrichtung zur Reinigung von konvertierten Gasen gemäß dem Verfahren nach Anspruch 1, mit einer Waschsäule, einer $CO_2$-Abstrippsäule und einer $H_2S$-Anreicherungssäule, **dadurch gekennzeichnet,** daß von einer Leitung (4), die Synthesegas von der Waschsäule (3) ableitet, eine zweite Leitung (5) abzweigt, die in den unteren Abschnitt der $CO_2$-Abstrippsäule (6) führt, daß die Waschsäule (3) mit der $CO_2$-Abstrippsäule (6) so verbunden ist, daß eine Leitung (7) für mit $CO_2$ beladenem Waschmittel von dem oberen Teil der Waschsäule (3) zu der Abstrippsäule (6) führt, die über eine Leitung (9) wiederum mit der $H_2S$-Anreicherungssäule (10) verbunden ist, wobei eine Leitung (11) für $H_2S$/COS-reiches Waschmittel von dem unteren Abschnitt der Waschsäule (3) zu der Anreicherungssäule (10) führt, daß Leitungen (15, 19) von der Unterseite der Anreicherungssäule (10) über einen Warmregenerierer (16), der mit einer Claus-Anlage (18) verbunden ist, zu dem oberen Abschnitt der Waschsäule (3) führen und daß aus dem oberen Teil der $CO_2$-Abstrippsäule (6) über eine Leitung (8) $CO_2$-angereichertes Brenngas abgezogen wird.

**11.** Vorrichtung nach Anspruch 11, dadurch gekennzeichnet, daß die Leitung (19) vom Warmregenerierer (16) zu dem oberen Abschnitt der Waschsäule (3) über einen Wärmetauscher (13) führt, wobei der Wärmetauscher (13) mit einer seitlich von der Anreicherungssäule (10) herführenden Leitung (12) verbunden ist.

**Claims**

**1.** A process for purifying crude gases produced in the gasification of coal with simultaneous acquisition of synthesis gas, of combustible gas rich in $CO_2$ for the generation of electrical energy by gas turbine, and of $H_2S$/COS-rich gas for the recovery of sulphur in a Claus apparatus, wherein the crude gas is converted and following the conversion is cooled, whereupon, in the lower section of a scrubbing column, $H_2S$ and COS are removed by a scrubbing agent precharged with $CO_2$, whilst $CO_2$ is scrubbed out in the upper section of the column and purified synthesis gas is discharged from the scrubbing column, characterised in that a part of the obtained synthesis gas is branched off, is used for stripping $CO_2$ under pressure from the scrubbing agent, exclusively charged with $CO_2$, from the upper section of the column and is obtained in the form of combustible gas enriched with $CO_2$, whereupon the partially stripped scrubbing agent, exclusively charged with $CO_2$, is used to concentrate sulphur compounds in a $H_2S$-concentration column, that the concentration of sulphur compounds in the $H_2S$-concentration column is carried out by rescrubbing the $H_2S$/COS, released together with the majority of the $CO_2$ in the stripping section of the $H_2S$-concentration column, with the cold scrubbing agent, charged with $CO_2$, from the $CO_2$- stripping column, and that the scrubbing agent, charged with $H_2S$, is subjected to thermal regeneration in order to obtain a $H_2S$/COS-rich gas fraction and regenerated scrubbing agent for the scrubbing column.

**2.** A process as claimed in Claim 1, characterised in that, prior to the conversion, a part of the crude gas is branched off and desulphurized, in unconverted form, in a further scrubbing column, and that the desulphurized, unconverted gas is used for the $CO_2$ stripping.

**3.** A process as claimed in one of Claims 1 and 2, characterised in that methanol, ethanol, acetone, N-methylpyrrolidone, dimethylformamide, propylene carbonate or polyethylene glycol dialkyl ether are used as scrubbing agent.

**4.** A process as claimed in one of Claims 1 to 3, characterised in that the scrubbing agent is cooled in the upper section of acid gas scrubbing column.

**5.** A process as claimed in one of Claims 1 to 4, characterised in that in advance of the $CO_2$- stripping column, the branched-off synthesis gas is expanded in an expansion turbine to the pressure of the combustion chamber with the production of energy.

**6.** A process as claimed in one of Claims 1 to 5, characterised in that in the stripping of $CO_2$ under pressure gases are admixed with the combustible gas, where said gases are preferably purge gases from a methanol synthesis process, residual gases from a nitrogen scrubbing stage or $N_2$ from an air separator.

**7.** A process as claimed in one of Claims 1 to 6, characterised in that the cold scrubbing agent is extracted laterally from the $H_2S$- concentration column and having been heated in the presence of regenerated scrubbing agent is returned to the column in a lower section thereof.

**8.** A process as claimed in one of Claims 1 to 7, characterised in that $N_2$ is used in the $H_2S$-concentration column for the $CO_2$- stripping.

**9.** A process as claimed in one of Claims 1 to 8, characterised in that the residual gas produced in the $H_2S$- concentration column, having been heated in the presence of incoming crude gas, is compressed together with the combustion air and is admixed to the combustible gas in advance of the combustion chamber.

**10.** A device for the purification of converted gases according to the process claimed in Claim 1, comprising a scrubbing column, a $CO_2$- stripping column, and a $H_2S$- concentration column, charac-

terised in that from a line (4) which withdraws synthesis gas from the scrubbing column (3) a second line (5) branches off, which line (5) leads into the lower section of the $CO_2$- stripping column (6), that the scrubbing column (3) is connected to the $CO_2$-strippingcolumn (6) in such manner that a line (7) for scrubbing agent charged with $CO_2$ leads from the upper section of the scrubbing column (3) to the stripping column (6), which latter is in turn connected via a line (9) to the $H_2S$- concentration column (10), where a line (11) for $H_2S/COS$- rich scrubbing agent leads from the lower section of the scrubbing column (3) to the concentration column (10), that lines (15, 19) lead from the underneath of the concentration column (10) via a thermal regenerator (16), which is connected to a Claus apparatus (18), to the upper section of the scrubbing column (3), and that $CO_2$- enriched combustible gas is discharged from the upper section of the $CO_2$-stripping column (6) via a line (8).

**11.** A device as claimed in Claim 11 (sic), characterised in that the line (19) leads from the thermal regenerator (16) to the upper section of the scrubbing column (3) via a heat exchanger (13), where the heat exchanger (13) is connected to a line (12) which extends laterally from the concentration column (10).

**Revendications**

**1.** Procédé de nettoyage des gaz bruts issus de la gazéification du charbon avec extraction simultanée de gaz de synthèse, de gaz combustibles riches en $CO_2$ pour la production, par turbine à gaz, d'énergie électrique et de gaz riches en $H_2S/COS$ pour l'obtention de soufre dans une installation selon le procédé Claus, dans lequel le gaz brut est converti et ensuite refroidi, après quoi, dans la section du bas de colonne d'une colonne de lavage, on sépare $H_2S$ et COS avec un agent de lavage préchargé avec $CO_2$ pendant que le $CO_2$ est éliminé par lavage dans la section supérieure et dans lequel du gaz de synthèse nettoyé sort de la colonne de lavage, caractérisé en ce qu'une partie du gaz de synthèse extrait est dévié et est employé pour enlever sous pression le $CO_2$ de l'agent de lavage, exclusivement chargé en $CO_2$, hors de la section supérieure de colonne, et est recueilli comme gaz de combustion enrichi en $CO_2$, après quoi, l'on utilise l'agent de lavage partiellement nettoyé et chargé exclusivement de $CO_2$ dans le but de concentrer les composés sulfurés dans une colonne d'enrichissement $H_2S$ et en ce que l'accroissement de la concentration en composés sulfureux a lieu dans la colonne d'enrichissement $H_2S$ par lavage en retour du $H_2S/COS$ libéré, avec la partie principale du $CO_2$, dans la section d'extraction de la colonne d'enrichissement de $H_2S$ au moyen de l'agent de lavage froid chargé de $CO_2$ venant de la colonne d'extraction de $CO_2$, et en ce que l'agent de lavage chargé d'$H_2S$ qui sert à l'obtention de la fraction gazeuse riche en $H_2S/COS$ et de l'agent de lavage régénéré pour la colonne de lavage est soumis à une régénération thermique.

**2.** Procédé selon la revendication 1, caractérisé en ce qu'une partie du gaz brut est dérivée avant la conversion, et cette partie est désulfurée, à l'état non converti, dans une colonne supplémentaire de lavage et en ce que l'on fait usage de gaz désulfuré non converti pour l'extraction du $CO_2$.

**3.** Procédé selon l'une des revendications 1 ou 2, caractérisé en ce que l'on utilise, comme agent de lavage, les substances suivantes: méthanol, éthanol, acétone, N-méthylpyrrolidone, diméthylformamide, propylènecarbonate ou polyéthylèneglycoldialkyléther.

**4.** Procédé selon l'une des revendications 1 à 3, caractérisé en ce que l'agent de lavage est refroidi dans la section du haut de la colonne de lavage à gaz acide.

**5.** Procédé selon l'une des revendications 1 à 4, caractérisé en ce que le gaz de synthèse dérivé est, préalablement à son passage dans la colonne d'extraction du $CO_2$, détendu jusqu'à la pression de la chambre de combustion dans une turbine de détente génératrice d'énergie.

**6.** Procédé selon l'une des revendications 1 à 5, caractérisé en ce que, lors de l'extraction du $CO_2$, des gaz sont mélangés, sous pression, au gaz de combustion, ces gaz étant de préférence des gaz de purge venant d'une synthèse de méthanol, des gaz résiduaires du lavage de l'azote ou de $N_2$ venant de la séparation de l'air.

**7.** Procédé selon l'une des revendications 1 à 6, caractérisé en ce que l'agent de lavage froid est prélevé sur le côté à la colonne d'enrichissement $H_2S$ et est renvoyé, après réchauffement contre l'agent de lavage régénéré de la colonne, en une section plus basse de celle-ci.

8. Procédé selon l'une des revendications 1 à 7, caractérisé en ce que l'on emploie, dans la colonne d'enrichissement $H_2S$, de l'azote pour l'extraction du $CO_2$.

9. Procédé selon l'une des revendications 1 à 8, caractérisé en ce que le gaz résiduaire de la colonne d'enrichissement $H_2S$ est, après réchauffement par sa rencontre avec le gaz brut, comprimé avec l'air de combustion et est mélangé au gaz combustible avant l'enceinte de combustion.

10. Dispositif pour le nettoyage de gaz converti, selon le procédé de la revendication 1, avec une colonne de lavage, une colonne d'extraction de $CO_2$ et une colonne d'enrichissement $H_2S$, caractérisé en ce qu'au départ d'une conduite (4) qui évacue les gaz de synthèse de la colonne de lavage (3), part une dérivation (5) qui mène dans la section basse de la colonne (6) d'extraction de $CO_2$ et en ce que la liaison entre la colonne de lavage (3) avec celle (6) d'extraction de $CO_2$ est telle qu'une conduite (7) pour l'agent de lavage chargé de $CO_2$ fait la jonction entre la partie supérieure de la colonne (3) de lavage vers la colonne (6) d'extraction, laquelle est en liaison à son tour via une conduite (9) avec la colonne (10) d'enrichissement $H_2S$, tandis qu'une conduite (11) destinée à la partie riche en $H_2S/COS$ de l'agent de lavage va de la section inférieure de la colonne de lavage (3) à la colonne (10) d'enrichissement et en ce qu'également des conduites (15, 19) au départ du bas de la colonne d'enrichissement (10) mènent à la section supérieure de la colonne de lavage (3) via un régénérateur thermique (16) associé à une installation (18) utilisant le procédé Claus et en ce que le gaz combustible enrichi en $CO_2$ est enlevé, via la conduite (8), de la partie supérieure de la colonne (6) d'extraction de $CO_2$.

11. Dispositif selon la revendication 10, caractérisé en ce que la conduite (19) menant du régénérateur thermique (16) à la partie supérieure de la colonne (3) de lavage passe par un échangeur de chaleur (13), l'échangeur de chaleur (13) étant en liaison avec une conduite (12) partant latéralement de la colonne (10) d'enrichissement.